(19) Europäisches Patentamt
European Patent Office
Office européen des brevets

(11) **EP 0 778 700 B1**

(12) **FASCICULE DE BREVET EUROPEEN**

(45) Date de publication et mention
de la délivrance du brevet:
**12.09.2001 Bulletin 2001/37**

(51) Int Cl.⁷: **H04N 5/74**

(21) Numéro de dépôt: **96402512.6**

(22) Date de dépôt: **22.11.1996**

(54) **Perfectionnement au système de projection**

Verbesserung an Projektionssystemen

Improvement for projection system

(84) Etats contractants désignés:
**DE FR GB**

(30) Priorité: **06.12.1995 FR 9514431**

(43) Date de publication de la demande:
**11.06.1997 Bulletin 1997/24**

(73) Titulaire: **THOMSON multimedia**
**92648 Boulogne Cédex (FR)**

(72) Inventeur: **Sarayeddine, Khaled**
**92050 Paris La Défense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 657 769        EP-A- 0 659 024**

• **SID INTERNATIONAL SYMPOSIUM - DIGEST OF TECHNICAL PAPERS, vol. 25, no. 26.1, 14 - 16 Juin 1994, SAN JOSE (US), pages 399-402, XP000462723 R. MAURER ET AL.: "Cholesteric Reflectors with a Color Pattern"**

**Description**

La présente invention concerne un système de projection, plus particulièrement un système connu sous le terme rétroprojecteur. Les rétroprojecteurs, actuellement sur le marché, sont des systèmes utilisant comme projecteur, plus particulièrement un projecteur à cristaux liquides. Toutefois, la présente invention peut s'appliquer à tout type de systèmes de projection, notamment des systèmes de projection utilisant des tubes.

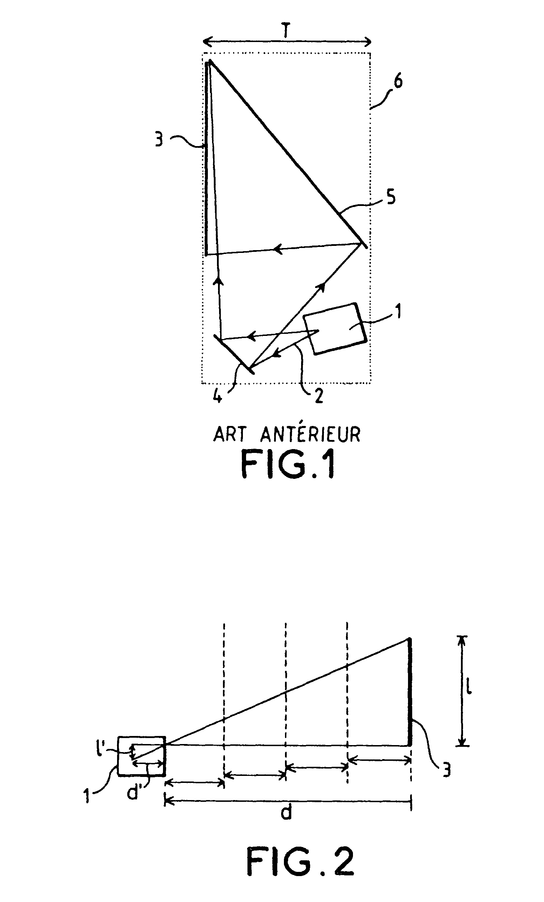

Comme représenté sur la figure 1, un rétroprojecteur de type connu comporte un projecteur 1 émettant un faisceau lumineux 2, un écran 3 et des moyens 4 et 5 pour envoyer le faisceau lumineux sur l'écran 3.

Sur la figure 1, les moyens permettant d'envoyer le faisceau lumineux 2 sur l'écran 3 sont constitués par deux miroirs plans 4 et 5, disposés de manière à réfléchir l'ensemble du faisceau lumineux sur toute la surface de l'écran, tout en limitant l'épaisseur de l'ensemble du système qui doit être inséré dans un boîte 6 d'épaisseur T limitée.

Malgré l'utilisation de deux miroirs positionnés, comme représenté sur la figure 1, pour un écran de 46" à savoir 117 cm de diagonale, l'épaisseur du rétroprojecteur reste malgré tout d'environ 46 cm. Cette épaisseur est trop importante si l'on veut utiliser des rétroprojecteurs à large écran notamment dans des petites pièces. Il est connu par le brevet EP-A-0 657 769 de réduire l'épaisseur du rétroprojecteur en utilisant une technique de repliement du faisceau lumineux avec deux réflexions.

La présente invention propose de réduire encore plus l'épaisseur du rétroprojecteur, notamment à une valeur correspondant au quart de la distance de projection lorsque le projecteur est positionné en dehors de l'axe de projection. En effet, si l'on considère un système de projection dans lequel le projecteur est positionné en dehors de l'axe de projection sur l'écran, comme représenté sur la figure 2, le faisceau lumineux émis par la lentille de projection 1 se trouve à une distance d satisfaisant à l'équation :

$$\frac{d}{d'} = \frac{l}{l'}$$

dans laquelle l correspond à la largeur de l'écran, l' correspond à la largeur de la valve électro-optique dans le cas d'un projecteur de type LCD, d' correspond à la distance de la valve électro-optique à la lentille de projection, plus précisément au plan principal de l'objectif de projection et d la distance de cette lentille à l'écran ou distance de projection. Cette distance de projection peut être divisée par quatre si l'on utilise une technique de repliement du faisceau lumineux, permettant de réfléchir la lumière plus de deux fois.

La présente invention a pour but de proposer un système permettant d'obtenir ce résultat applicable aussi bien lorsque le projecteur est positionné selon l'axe de projection qu'en dehors de l'axe de projection,

La présente invention a donc pour objet un système de projection du type comportant un projecteur émettant un faisceau lumineux, un écran et des moyens pour envoyer le faisceau lumineux sur l'écran, les moyens comportant :

-    un premier moyen polarisant circulairement dans un premier sens le faisceau lumineux issu du projecteur,
-    au moins un filtre de polarisation réfléchissant la lumière polarisée circulairement dans un second sens opposé au premier sens, et
-    un miroir plan, caractérisé en ce que

le filtre de polarisation et le miroir plan sont positionnés de manière à faire subir trois réflexions au faisceau lumineux issu du premier moyen entre ledit filtre de polarisation et ledit miroir, avant d'envoyer le faisceau sur l'écran, le faisceau lumineux issu du premier moyen se réfléchissant tout d'abord sur le miroir plan.

Selon un mode de réalisation préférentiel, le filtre de polarisation est un filtre cholestérique.

D'autre part, le projecteur est un projecteur à cristaux liquides émettant un faisceau lumineux polarisé linéairement. Dans ce cas, le premier moyen est constitué par une plaque quart d'onde.

Si le projecteur émet un faisceau lumineux non polarisé, le premier moyen comporte un moyen polarisant linéairement le faisceau lumineux associé à une plaque quart d'onde produisant un faisceau lumineux polarisé circulairement.

Selon une autre caractéristique de la présente invention, le filtre cholestérique comprend trois filtres cholestériques réfléchissant chacun un faisceau lumineux d'une bande spectrale différente mais polarisés circulairement dans le même sens. De préférence, les trois filtres sont accolés de manière à réaliser une seule plaque, la plaque étant réalisée sur une feuille transparente qui forme l'écran.

Les filtres cholestériques sont choisis de sorte que leurs bandes spectrales couvrent respectivement le rouge, le vert et le bleu sans interférence entre les bandes.

D'autre part, pour obtenir un fonctionnement correct des filtres cholestériques avec une bonne caractéristique de réflexion et de transmission, l'angle d'incidence du faisceau lumineux sur le filtre est choisi pour être normal à la surface du filtre ou pour avoir un angle d'incidence inférieur à 35° par rapport à la normale.

D'autres caractéristiques et avantages de la présente invention apparaîtront à la lecture de la description d'un mode de réalisation préférentiel, faite ci-après, avec référence aux dessins ci-annexés, dans lesquels :

-    la figure 1 déjà décrite est une vue en coupe schématique d'un rétroprojecteur conforme à l'art antérieur ;
- la figure 2 déjà décrite est une vue latérale expliquant le fonctionnement d'un rétroprojecteur dans lequel le dispositif de projection est placé en dehors de l'axe de projection :
- la figure 3 est une vue expliquant le principe de fonctionnement d'un rétroprojecteur utilisant des filtres de polarisation ;
- la figure 4 est une vue en coupe latérale schématique d'un rétroprojecteur conforme à la présente invention, et
- la figure 5 représente la caractéristique de transmittance d'un filtre cholestérique en fonction de la longueur d'ondes.

Pour simplifier la description, dans les figures les mêmes éléments portent les mêmes références.

La présente invention utilise les propriétés des filtres de polarisation tels que les filtres cholestériques, concernant la transmission et la réflexion d'une lumière polarisée circulairement pour obtenir une réflexion multiple du faisceau lumineux polarisé linéairement issu du projecteur qui, dans le présent cas, est un projecteur de type LCD. En effet, les filtres cholestériques ont la propriété de réfléchir la lumière polarisée circulairement selon un premier sens et de transmettre la lumière polarisée circulairement selon l'autre sens de rotation. Cette propriété est obtenue lorsque le faisceau lumineux éclairant le filtre cholestérique a une incidence perpendiculaire ou inférieur à 35° par rapport à la perpendiculaire. Dans ce cas, les caractéristiques de réflexion et de polarisation du filtre sont bonnes.

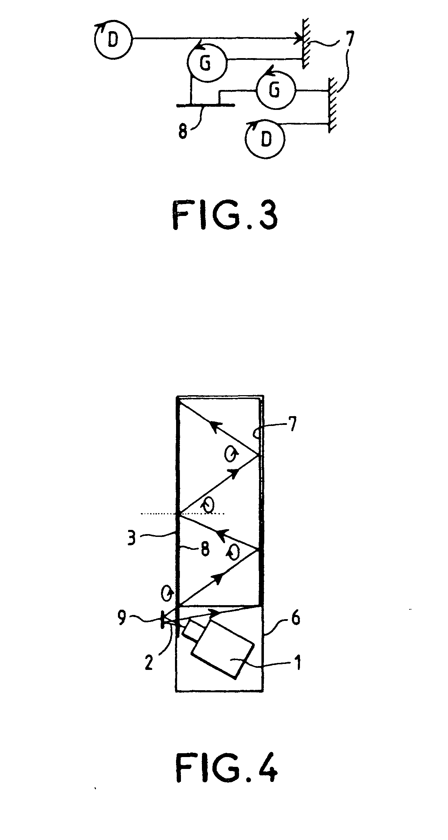

On expliquera maintenant, de manière plus détaillée, le fonctionnement d'un rétroprojecteur utilisant des filtres cholestériques pour diminuer l'épaisseur de la boîte en se référant aux figures 3 et 4. Sur la figure 3, on a représenté schématiquement les modifications du sens de rotation de la polarisation de la lumière en fonction du moyen sur lequel se réfléchit la lumière. Ainsi, la lumière en entrée, référencée INPUT, est polarisée circulaire droite. Lors d'une première réflexion sur un miroir plan 7, elle devient polarisée circulaire gauche, puis elle se réfléchit sur un filtre cholestérique 8 où elle reste polarisée circulaire gauche. Après une deuxième réflexion sur un miroir plan, elle sort polarisée circulaire droite (D). Avec référence à la figure 4, on décrira de manière plus détaillée le rétroprojecteur utilisant le principe ci-dessus. Dans ce cas, le projecteur 1 qui est un projecteur à cristaux liquides émet un faisceau 2 qui est déjà polarisé linéairement. Ce faisceau 2 est envoyé sur un petit miroir puis sur une plaque quart-d'onde 9, de manière à produire une lumière polarisée circulairement. Cette lumière polarisée circulairement, par exemple à droite si on utilise des filtres cholestériques réfléchissant la lumière polarisée circulairement à gauche, est transmise à travers le filtre cholestérique 8 et se réfléchit sur le miroir plan 7. Dans ce cas, elle subit un décalage de phase de $\pi$ lors de la réflexion et le faisceau est alors polarisé à gauche. Le faisceau issu du miroir plan 7 rencontre alors le filtre cholestérique 8. Comme le filtre cholestérique réfléchit toute lumière polarisée à gauche, la lumière issue du miroir est renvoyée sur le miroir 7 où elle subit un nouveau décalage de phase de $\pi$. La réflexion sur le miroir plan transforme donc une lumière polarisée à gauche en une lumière polarisée à droite qui est alors totalement transmise par le filtre cholestérique vers l'écran. Ainsi, dans le système conforme à la présente invention, trois réflexions prennent place, deux sur le miroir plan et une sur le filtre cholestérique, comme représenté clairement sur la figure 4. Avec un système de ce type, un rétroprojecteur présentant une épaisseur de 20 cm peut être obtenu avec une distance de projection de 80 cm. Dans le présent cas, comme on peut le voir sur la figure 4, le projecteur 1 est positionné complètement en-dehors de l'axe de projection du système. Toutefois cette caractéristique n'est pas obligatoire dans le cadre de la présente invention ; elle permet simplement d'obtenir une hauteur minimum pour le système de projection comme représenté sur la figure 4.

La présente invention utilise les propriétés des filtres de polarisation, tels que les filtres cholestériques.

Dans les cristaux liquides cholestériques, les molécules, de formes allongées, sont arrangées en couches. Dans chacune de ces couches les axes longs des molécules sont parallèles entre eux selon la direction $\bar{n}$. Le vecteur directeur $\bar{n}$ de ces molécules tourne de quelques 10 à 20 minutes d'arc sur les couches successives. Les molécules décrivent donc une hélice dont l'axe est perpendiculaire au substrat qui encadre le cristal liquide. Lorsque le vecteur directeur a tourné de 360 degrés, alors la structure est reproduite. Plusieurs structures sont nécessaires pour filtrer un faisceau blanc (20 par exemple).

Un faisceau blanc non polarisé incident sur le filtre est considéré comme la somme de faisceaux polarisés linéairement. Chacune de ces polarisations est la somme de 50% circulaire droite et 50% circulaire gauche. La polarisation circulaire droite, par exemple, verra toujours le même indice n lorsqu'elle traverse les couches, alors que la circulaire gauche se réfléchit à chaque interface. Les réflexions s'additionnent en phase. La bande spectrale réfléchie Dl est reliée au pas de la structure cholestérique par : Dl = p. dn; p étant le pas. dn est la variation d'indice du cristal liquide.

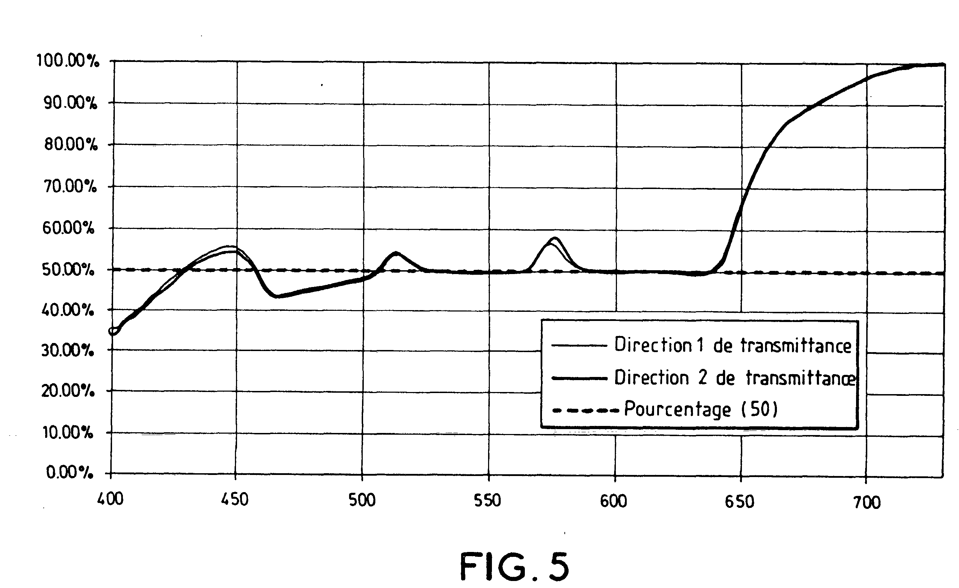

Les filtres cholestériques sont des filtres de polarisation connus. Ils sont constitués par une vingtaine de couches de cristaux liquides cholestériques, chaque couche étant équivalente à une couche $\frac{n}{\Delta n}$ dans un filtre interférentiel. Les filtres cholestériques réfléchissent normalement une bande de longueur d'ondes, à savoir une couleur. Dans le cas d'un rétroprojecteur, il est donc nécessaire d'utiliser trois filtres, chaque filtre réfléchissant une couleur spécifique telle que le rouge, le vert et le bleu. Ces trois filtres peuvent être réalisés sous forme d'une seule plaque. D'autre part, comme la lumière est réfléchie par les couches internes du filtre cholestérique, il est possible d'utiliser la seconde frontière filtre cholestérique/air qui est en fait la surface air/ verre lorsque le filtre est réalisé sur une plaque de verre, pour obtenir la fonction écran du rétroprojecteur sans perdre de surface et en conséquence sans perte de Fresnel. Toutefois, pour ne pas obtenir d'interférences au niveau de la transmission lumineuse et ne pas perturber le contraste de l'image, les courbes de réflexion et de transmission des filtres cholestériques doivent être choisies avec soin, de sorte que la courbe de réflexion couvre correctement les trois largeurs de bande, à savoir les largeurs de bande rouge, verte et bleue. Un exemple de filtre, répondant à ces critères, est montré sur la figure 5 qui représente la caractéristique de transmittance du filtre cholestérique formé par l'accolement de trois filtres cholestériques rouge, vert, bleu, en fonction de la longueur d'ondes en nm.

La présente invention a été décrite en se référant à un projecteur du type à cristaux liquide. Toutefois la présente invention peut s'appliquer à d'autres types de projecteur. Dans ce cas, si la lumière issue du projecteur n'est pas polarisée linéairement, comme dans le cas d'un projecteur à cristaux liquides, un moyen de polarisation de la lumière sera nécessaire avant la plaque quart-d'onde.

**Revendications**

1. Système de projection du type comportant un projecteur (1) émettant un faisceau lumineux, un écran (3) et des moyens (7,8,9) pour envoyer le faisceau lumineux sur l'écran, ces moyens comportant :

   - un premier moyen (9) polarisant circulairement dans un premier sens le faisceau lumineux issu du projecteur,
   - au moins un filtre de polarisation (8) réfléchissant la lumière polarisée circulairement dans un second sens opposé au premier sens et un miroir plan (7), **caractérisé en ce que**
   - le filtre de polarisation et le miroir plan sont positionnés de manière à faire subir trois réflexions au faisceau lumineux issu du premier moyen, entre ledit filtre de polarisation et ledit miroir plan avant d'envoyer le faisceau sur l'écran, le faisceau lumineux issu du premier moyen (9) se réfléchissant tout d'abord sur le miroir plan.

2. Système selon la revendication 1, **caractérisé en ce que** le filtre de polarisation est un filtre cholestérique.

3. Système selon les revendications 1 et 2, **caractérisé en ce que** le projecteur est un projecteur à cristaux liquides émettant un faisceau lumineux polarisé linéairement.

4. Système selon la revendication 2, **caractérisé en ce que** le premier moyen est constitué par une plaque quart d'onde.

5. Système selon la revendication 1, **caractérisé en ce que**, si le projecteur émet un faisceau lumineux non polarisé, le premier moyen comporte un moyen polarisant linéairement le faisceau lumineux associé à une plaque quart d'onde produisant un faisceau lumineux polarisé circulairement.

6. Système selon l'une quelconque des revendications 1 à 5, **caractérisé en ce que** le filtre cholestérique comprend trois filtres cholestériques réfléchissant chacun un faisceau lumineux d'une bande spectrale différente mais polarisée circulairement dans le même sens.

7. Système selon la revendication 6, **caractérisé en ce que** les trois filtres sont accolés de manière à réaliser une seule plaque.

8. Système selon la revendication 7, **caractérisé en ce que** la plaque est réalisée sur une feuille transparente.

9. Système selon la revendication 8, **caractérisé en ce que** la feuille transparente forme l'écran.

10. Système selon les revendications 6 à 9, **caractérisé en ce que** les trois filtres cholestériques sont choisis de sorte que leurs bandes spectrales couvrent respectivement le rouge, le vert et le bleu sans interférence entre les bandes.

11. Système selon l'une quelconque des revendications 1 à 10, **caractérisé en ce que** l'angle d'incidence du faisceau lumineux sur le filtre est choisi pour être normal à la surface du filtre ou pour avoir un angle d'incidence < 35° par rapport à la normale.

12. Système selon l'une quelconque des revendications 1 à 11, **caractérisé en ce que** le projecteur est placé en dehors de l'axe de projection, le filtre de polarisation et le miroir étant positionnés sensiblement parallèlement l'un à l'autre.

**Claims**

1. Projection system of the type including a projector (1) which emits a light beam, a screen (3) and means (7,8,9) for directing the light beam onto the screen, these means including:

   - a first means (9) which circularly polarizes in a first sense the light beam output by the projector,

- at least one polarization filter (8) which reflects light circularly polarized in a second sense, the opposite of the first sense, and a plane mirror (7), **characterized in that**
- the polarization filter and the plane mirror are positioned such as to make the light beam output by the first means undergo three reflections, between the said polarization filter and the said plane mirror, before directing the beam onto the screen, the light beam output by the first means (9) being reflected firstly on the plane mirror.

2. System according to Claim 1, **characterized in that** the polarization filter is a cholesteric filter.

3. System according to Claims 1 and 2, **characterized in that** the projector is a liquid-crystal projector emitting a linearly polarized light beam.

4. System according to Claim 2, **characterized in that** the first means consists of a quarter-wave plate.

5. System according to Claim 1, **characterized in that**, if the projector emits an unpolarized light beam, the first means includes a means which linearly polarizes the light beam and is associated with a quarter-wave plate producing a circularly polarized light beam.

6. System according to any one of Claims 1 to 5, **characterized in that** the cholesteric filter comprises three cholesteric filters which each reflect a light beam which is in a different spectral band but is circularly polarized in the same sense.

7. System according to Claim 6, **characterized in that** the three filters are fitted together so as to produce a single plate.

8. System according to Claim 7, **characterized in that** the plate is produced on a transparent sheet.

9. System according to Claim 8, **characterized in that** the transparent sheet forms the screen.

10. System according to Claims 6 to 9, **characterized in that** the three cholesteric filters are chosen such that their spectral bands respectively cover the red, green and blue bands without overlap between the bands.

11. System according to any one of Claims 1 to 10, **characterized in that** the angle of incidence of the light beam on the filter is chosen to be normal to the surface of the filter or to have an angle of incidence < 35° with respect to the normal.

12. System according to any one of Claims 1 to 11, **characterized in that** the projector is placed off the projection axis, the polarization filter and the mirror being positioned substantially parallel to each other.

**Patentansprüche**

1. Projektionssystem vom Typ mit einem ein Lichtbündel aussenden Projektor (1), einem Schirm (3) und Mitteln (7, 8, 9) zum Lenken des Lichtbündels auf den Schirm mit folgenden Merkmalen:

   - ein erstes Mittel (9) zur Zirkularpolarisation des Lichtbündels von dem Projektor in einer ersten Richtung,
   - wenigstens ein Polarisationsfilter (8), das das zirkularpolarisierte Licht in einer zu der ersten Richtung entgegengesetzten zweiten Richtung reflektiert, und
   - ein flacher Spiegel (7),

     **dadurch gekennzeichnet, daß**

   - das Polarisationsfilter und der flache Spiegel derart angeordnet sind, daß das von dem ersten Mittel ausgehende Lichtbündel drei Reflexionen zwischen dem Polarisationsfilter und dem flachem Spiegel unterliegt, bevor das Lichtbündel zu dem Schirm gelenkt wird, und das von dem ersten Mittel (9) ausgehende Lichtbündel zunächst auf den flachen Spiegel reflektiert wird.

2. System nach Anspruch 1, **dadurch gekennzeichnet, daß** das Polarisationsfilter ein cholesterisches Filter ist.

3. System nach Anspruch 1 und 2, **dadurch gekennzeichnet, daß** der Projektor ein Flüssigkristall-Projektor ist und ein linear-polarisiertes Lichtbündel aussendet.

4. System nach Anspruch 2, **dadurch gekennzeichnet, daß** das erste Mittel durch eine Platte mit einer Viertelwellenlänge gebildet ist.

5. System nach Anspruch 1, **dadurch gekennzeichnet, daß** dann, wenn der Projektor ein nicht-polarisiertes Lichtbündel aussendet, das erste Mittel weitere Mittel enthält, die das Lichtbündel linear polarisieren, das einer Platte mit einer Viertelwellenlänge zugeordnet ist, die ein zirkularpolarisiertes Lichtbündel erzeugt.

6. System nach einem der Ansprüche 1 bis 5, **dadurch gekennzeichnet, daß** das cholesterische Filter drei cholesterische Filter enthält, von denen jedes ein Lichtbündel reflektiert, das in einem anderen Spektralband liegt, jedoch in derselben Richtung zirkularpolarisiert ist.

7. System nach Anspruch 6, **dadurch gekennzeichnet, daß** die drei Filter derart zusammengefaßt sind, daß sie eine einzige Platte bilden.

8. System nach Anspruch 7, **dadurch gekennzeichnet, daß** die Platte auf einer transparenten Schicht ausgebildet ist.

9. System nach Anspruch 8, **dadurch gekennzeichnet, daß** die transparente Schicht den Bildschirm bildet.

10. System nach Anspruch 6 bis 9, **dadurch gekennzeichnet, daß** die drei cholesterischen Filter so gewählt sind, daß ihre Spektralbänder jeweils das rote, grüne und blaue Band ohne Überlappung zwischen den Bändern abdecken.

11. System nach einem der Ansprüche 1 bis 10, **dadurch gekennzeichnet, daß** der Einfallswinkel des Lichtbündels auf das Filter so gewählt ist, daß es senkrecht zu der Oberfläche des Filters liegt oder einen Eintrittswinkel < 35° zu der Senkrechten aufweist.

12. System nach einem der Ansprüche 1 bis 11, **dadurch gekennzeichnet, daß** der Projektor zur Projektionsachse versetzt ist und das Polarisationsfilter und der Spiegel im wesentlichen parallel zueinander liegen.

ART ANTÉRIEUR
# FIG.1

# FIG.2

FIG.3

FIG.4

FIG. 5

EP 0 778 700 B1